Europäisches Patentamt

European Patent Office

Office européen des brevets

(19)

(11) Veröffentlichungsnummer: **0 283 650 B1**

# (12) EUROPÄISCHE PATENTSCHRIFT

(45) Veröffentlichungstag der Patentschrift: **28.08.91**

(51) Int. Cl.⁵: **G01B 7/28**, B07C 5/08

(21) Anmeldenummer: **88100720.7**

(22) Anmeldetag: **20.01.88**

(54) **Messeinrichtung für die Gestalt von schraubenförmigen Bauteilen.**

(30) Priorität: **28.02.87 DE 3706574**

(43) Veröffentlichungstag der Anmeldung:
**28.09.88 Patentblatt 88/39**

(45) Bekanntmachung des Hinweises auf die
Patenterteilung:
**28.08.91 Patentblatt 91/35**

(84) Benannte Vertragsstaaten:
**CH DE ES FR GB IT LI SE**

(56) Entgegenhaltungen:
**GB-A- 885 639**
**GB-A- 1 125 272**
**GB-A- 2 025 067**
**US-A- 3 883 796**
**US-A- 4 457 622**

(73) Patentinhaber: **ROBERT BOSCH GMBH**
**Postfach 50**
**W-7000 Stuttgart 1(DE)**

(72) Erfinder: **Dobler, Klaus, Dr. Dipl.-Ing.**
**Bettäckerstrasse 12**
**W-7016 Gerlingen(DE)**
Erfinder: **Hachtel, Hansjörg, Dipl.-Ing.**
**Buchenstrasse 4**
**W-7251 Weissach(DE)**

## Beschreibung

### Stand der Technik

Die Erfindung geht aus von einer Meßeinrichtung zur berührungsfreien Erfassung der Gestalt von metallischen schraubenförmigen Bauteilen nach der Gattung des Hauptanspruchs. Es ist bereits eine derartige Meßeinrichtung bekannt, bei der die Gestalt von Schrauben mit Hilfe eines optischen Verfahrens bestimmt wird. Dabei wird mit einem Lichtstrahl die Gestalt der Schrauben abgetastet. Es kann aber nicht die vollständige Gestalt der auf einem kontinuierlich laufenden Band angeordneten Schrauben in einem einzigen Arbeitsgang überprüft werden. Dadurch verbleiben fehlerhafte Schrauben zurück, die erst mit Hilfe eines zweiten Prüfverfahrens aussortiert werden können. Dadurch ist die Meßeinrichtung aufwendig und teuer. Ferner ist das Meßverfahren leicht durch Schmutzteilchen zu beeinträchtigen. Fehler, die sich am Umfang oder an der Oberfläche der Schraube befinden, können mit dem optischen Verfahren nicht erkannt werden. Auch können nicht die verschiedenen Arten von Schrauben, wie Innensechskant- oder Kreuzschlitzschrauben erkannt werden, da Innenkonturen an den Schrauben nicht oder nur mit sehr großem Aufwand optisch überprüfbar sind.

Aus der US-A-4 457 622 ist eine Meßeinrichtung zur berührungsfreien Erfassung der Gestalt von Schrauben bekannt, bei der mit mindestens einem optischen Sender und Empfänger die Form der Schrauben ermittelt wird. Dabei ist es aber nur möglich, mit Hilfe der optischen Sensoren eine spezielle Form, zum Beispiel die Länge der Schraube oder die Kopfform der Schraube zu überprüfen. Insbesondere bei verschmutzten Schrauben ist dieses Meßsystem sehr fehleranfällig.

Ferner ist in der US-A-3 883 796 beschrieben, die Gestalt von Bauteilen mit Hilfe einer von einem Wechselstrom durchflossenen Spule und einer entsprechenden Auswerteschaltung zu ermitteln. Das Meßprinzip beruht auf der Bestimmung des unterschiedlichen Abstands zwischen den Bauteilen und der Spule. Dadurch können nur Meßfehler, die eindeutig auf einer Abstandsänderung zur Spule beruhen, ermittelt werden. Rollen die Bauteile an der Spule vorbei, so können sich eventuell unterschiedliche, auf einem Bauteil auftretende Meßfehler gegenseitig kompensieren, so daß ein fehlerhaftes Bauteil nicht als fehlerhaft erkannt wird.

### Vorteile der Erfindung

Die erfindungsgemäße Einrichtung mit den Merkmalen des Anspruchs 1 hat demgegenüber den Vorteil, daß die vollständige Gestalt der Schraube, sowohl deren Form als auch ihre Länge, in einem einzigen Arbeitsgang relativ sicher erfaßt werden kann. Die Meßeinrichtung ist sehr einfach bei einem kontinuierlich, automatisch ablaufenden Arbeitsvorgang einsetzbar. Die Genauigkeit der zu messenden Signale wird verbessert, so daß die Schrauben selbst mit kleinsten Toleranzbereichen aussortiert werden können. Die noch verbleibende Ausschußquote ist sehr gering. Störeinflüsse durch die Umgebung, z.B. Temperatur, werden eliminiert. Es ergeben sich keine Probleme durch Verschmutzungen, so daß sich keine Einschränkungen bezüglich des Einsatzortes der Meßeinrichtung ergeben. Der Wartungsaufwand ist gering. Mehrere Fehlerparameter der Schrauben können gleichzeitig oder hintereinander erkannt werden. Insbesondere kann gleichzeitig auch die Qualität der Schrauben, z.B. bezüglich Risse, überwacht werden. Die Meßeinrichtung ist uneingeschränkt für alle Metallschraubenarten anwendbar, die auch ohne große Umbaumaßnahmen am Sortierer aussortiert werden können. In einer besonderen Ausgestaltung nach Anspruch 15 brauchen bei Änderung der zu überprüfenden Qualität und Form der Schrauben keine neuen Werte in die Prüfelektronik eingegeben zu werden. Es genügt vielmehr, wenn das Referenzteil ausgetauscht wird, wodurch die Umrüstzeit verkleinert wird, da die Neuabstimmung der Auswerteelektronik weitgehend entfällt.

Durch die in den Unteransprüchen aufgeführten Maßnahmen sind vorteilhafte Weiterbildungen und Verbesserungen der im Hauptanspruch angegebenen Meßeinrichtung möglich.

### Zeichnung

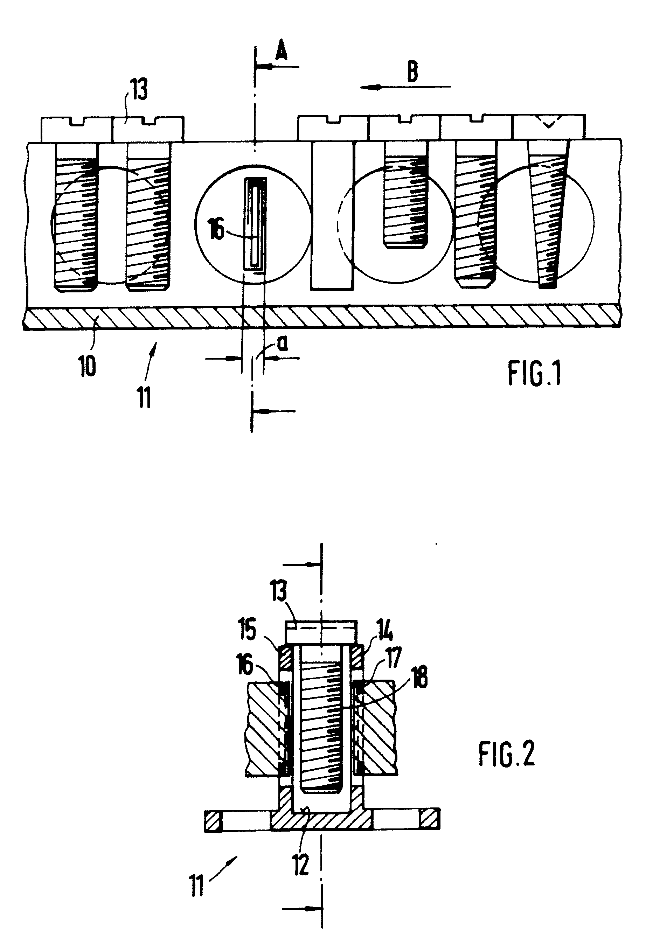

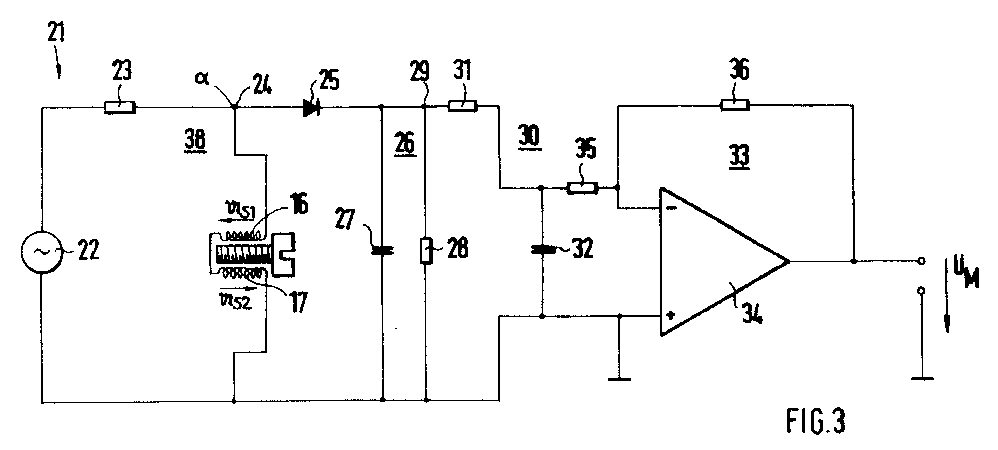

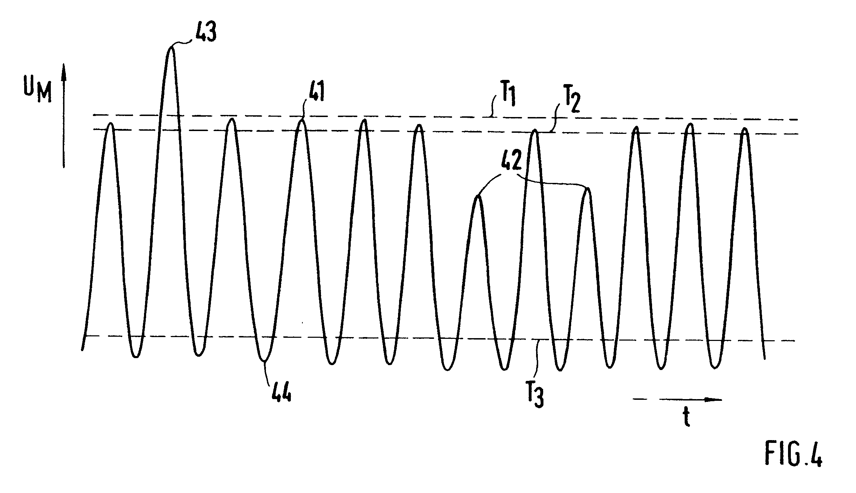

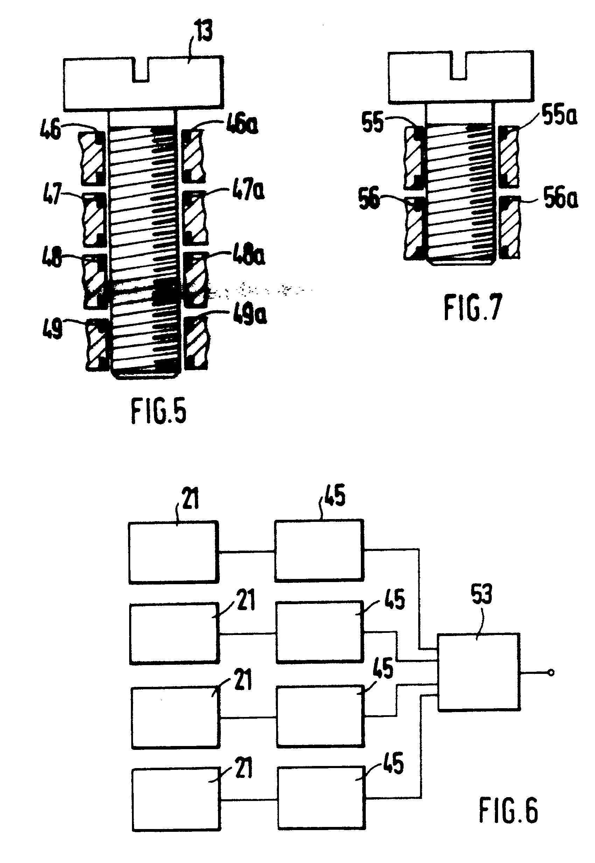

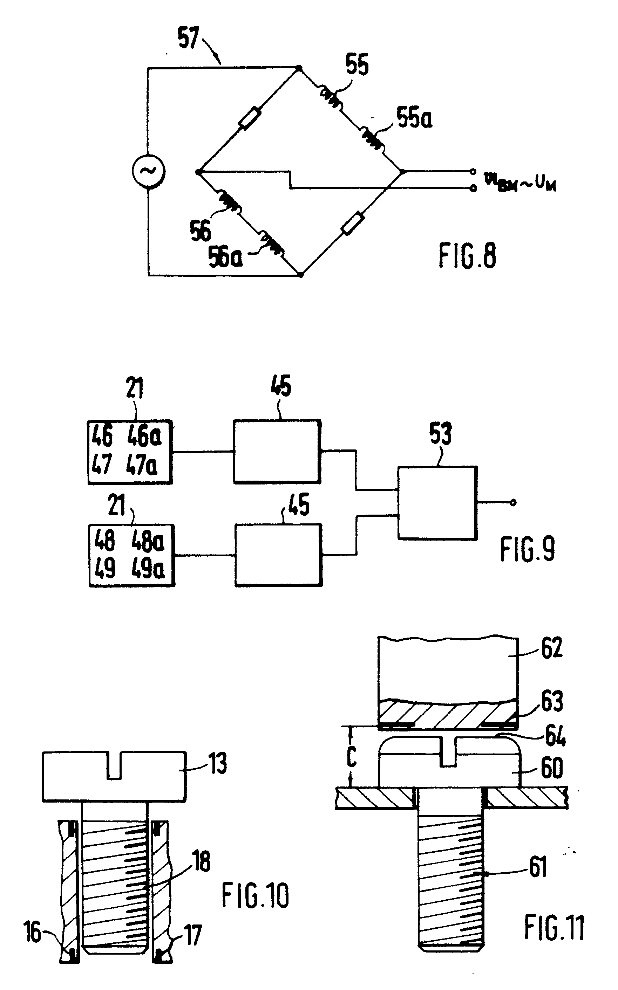

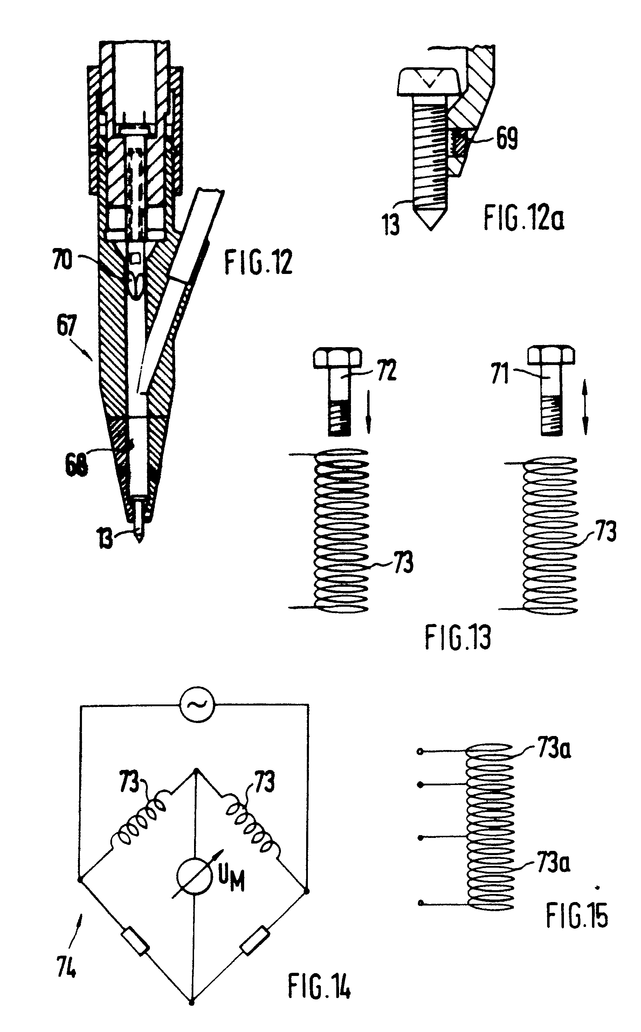

Ein Ausführungsbeispiel der Erfindung ist in der Zeichnung dargestellt und in der nachfolgenden Beschreibung näher erläutert. Es zeigen Figur 1 einen Längsschnitt durch einen Linearförderer mit unterschiedlichen Schrauben, Figur 2 einen Schnitt in Richtung A der Figur 1, Figur 3 ein Schaltbild, Figur 4 ein Diagramm mit dem Verlauf der Meßspannung $U_M$ über der Zeit t, Figuren 5 und 7 je eine Abwandlung des Ausführungsbeispiels, Figuren 6 und 9 je ein zu den Ausführungsbeispielen nach den Figuren 5 und 7 gehörendes Schaltbild, Figur 8 eine Schaltung der Spulen für das Ausführungsbeispiel Figur 7, Figur 10 eine weitere Abwandlung des Ausführungsbeispiels, Figur 11 eine Abwandlung des Ausführungsbeispiels zur Bestimmung der Schraubenkopfkontur, Figure 12 eine Positioniereinrichtung und die Figuren 13 bis 15 eine weitere Abwandlung des Ausführungsbeispiels mit den dazugehörigen Schaltbild.

### Beschreibung des Ausführungsbeispiels

In Figur 1 ist mit 10 die Zuführschiene eines Linearförderer 11 bezeichnet, in dessen Schlitz 12 Schrauben 13 hängen. In den beiden Seitenwänden 14, 15 des Schlitzes 12 befindet sich, wie aus Figur 2 näher ersichtlich, je eine Spule 16, 17. Für eine möglichst gute Meßgenauigkeit empfiehlt es sich, die Spulen 16, 17 in einer rechteckigen Form auszubilden. Es ist auch eine ovale Spulenform möglich. Dadurch wird eine relativ große Fläche des Schafts 18 der Schraube 13 erfaßt, wobei die Spulen selbst möglich schmal bauen. In der Figur 1 sind im Linearförderer 11 mehrere unterschiedliche Schraubenformen eingezeichnet, um die Vielfalt der zu überwachenden Schrauben bzw. deren Fehler aufzuzeigen.

Die beiden Spulen 16, 17 sind in Reihe und in einer in Figur 3 dargestellten Auswerteschaltung 21 verschaltet. Ein Wechselstromgenerator 22 speist über einen Vorwiderstand 23 die Spulen 16, 17 mit einer hochfrequenten Wechselspannung. An den Spulen 16, 17 ist ein Sensorsignal 24 abnehmbar, das über eine Diode 25, eine Siebschaltung 26, bestehend aus einem Siebkondensator 27 und einem Ableitwiderstand 28, zugeführt wird. Die gesiebte Signalspannung 29 gelangt über eine Tiefpaßanordnung 30, die aus einem Widerstand 31 und einem Kondensator 32 gebildet wird, in eine Verstärkeranordnung 33. Die Verstärkeranordnung 33 ist als invertierende Operationsverstärkerschaltung 34 ausgebildet, deren Verstärkungsfaktor mit den beiden Widerständen 35, 36 einstellbar ist. Die beiden Spulen 16, 17 können in einer Spannungsteilerschaltung 38 oder, wie in Figur 8 gezeigt, in einer sogenannten Halbbrückenschaltung bzw. in einem Zweig einer Wheatstone'schen Brücke miteinander verschaltet sein.

Bei Inbetriebnahme des Linearförderers 11 werden diese Schrauben nacheinander in Pfeilrichtung B zwischen den beiden Spulen 16, 17 hindurchgeführt. Werden dabei die Spulen 16, 17 von einem hochfrequenten Wechselstrom durchflossen, so entstehen dadurch an den Spulen 16, 17 magnetische Wechselfelder. Diese bewirken auf den metallischen Oberflächen der Gewindeschäfte 18 Wirbelströme. Je größer dabei die vom Magnetfeld durchsetzte Fläche der Schäfte 18 ist, desto mehr Wirbelströme werden erzeugt. Ferner ist die Größe der erzeugten Wirbelströme abhängig vom Material der Schrauben sowie vom Abstand der Spulen 16, 17 zu den Oberflächen der Schäfte 18. Durch die erzeugten Wirbelströme wird der Spulen-Wechselstromwiderstand verringert, was eine Verkleinerung der an den Spulen 16, 17 anliegenden Spannung bewirkt. Ist der Abstand der Oberflächen zu den beiden Spulen 16, 17 gleich groß, so ist diese Änderung des Wechselstromwiderstandes nahezu gleich groß. In der Praxis ist diese optimale Positionierung der Schrauben 13 zwischen den Spulen 16, 17 nur schwer möglich. Ist der Abstand auf einer Seite, z.B. zur Spule 16, verringert, so wird durch eine Erhöhung der erzeugten Wirbelströme in der Oberfläche der Schraube 13 der Widerstandswert der Spule 16 verkleinert. Gleichzeitig bewirkt die zwangsläufig sich ergebende Vergrößerung des Abstandes auf der anderen Seite eine Verminderung der in der Oberfläche erzeugten Wirbelströme und damit eine Vergrößerung des Widerstandswertes der Spule 17. Bei optimaler, gleicher Auslegung, insbesondere der Spulengröße, sind diese Änderungen des Wechselstromwiderstandes nahezu gleich groß und heben sich bei einer Differenzschaltung der Spulen 16, 17 weitgehend gegenseitig auf. Dadurch ist das an der Stelle $\alpha$ in der Schaltung 21 abgegriffene Sensorsignal 24 nahezu vollständig nur vom Durchmesser und von der Form des Schraubengewindes abhängig.

Im in der Figur 4 dargestellten Diagramm ist der Verlauf der Meßspannung $U_M$ über der Zeit t, d.h. während des Durchlaufs der Schrauben 13 durch die beiden Spulen 16, 17 aufgetragen. Das Diagramm wird folgendermaßen gewonnen: Die an der Stelle $\alpha$ anliegenden Spannungswerte 24 werden durch die nachfolgende invertierende Operationsverstärkerschaltung 33 gespiegelt und zusätzlich durch eine nicht dargestellte Hilfsschaltung in den positiven Spannungsbereich angehoben. Abhängig von der Form und der Höhe des Meßsignals $U_M$ kann man fehlerhafte Schraubengeometrien, eine zu kurze Schraube, eine Schraube mit fehlerhaftem Gewindeschnitt, eine konische Blechschraube, oder sogar Qualitätsfehler erkennen. Sind hingegen die Gewinde in Ordnung, so erhält man nahezu gleich hohe Meßsignale 41. Immer wenn sich infolge fehlerhafter Schraubengeometrien zu wenig Wirbelströme ausbilden, z.B. wenn der Gewindedurchmesser zu klein ist, oder die Schraube zu kurz ist, bildet sich ein niedrigeres Meßsignal 42 aus. Werden jedoch zu viel Wirbelströme erzeugt, z.B. wenn der Schaftdurchmesser zu groß ist, der Gewindeschnitt fehlt oder unvollständig ist, ergeben sich höhere Meßsignale 43. Mißt man die Position zwischen den Schrauben, also nur bei Luft, erhält man aufgrund obiger Schaltung das Meßsignal 44.

Eine in Figur 6 und 9 dargestellte Signalaufbereitungselektronik 45 grenzt mit den Triggerspannungen $T_1$ und $T_2$ den Bereich, d.h. den Sollwertbereich, ein, in dem sich die Höhe der Meßsignale 41 für korrekte Schrauben 13 ausbilden sollten. Die Triggerspannungen $T_1$ und $T_2$ sind dabei die vorgegebenen Grenzbereiche der gewünschten Toleranzen der Schrauben 13. Je größer dieser Bereich ist, desto größer ist auch der Toleranzbereich für die jeweiligen Schrauben 13. Ferner ist in der Signalaufbereitungselektronik 45 eine dritte Triggerspannung $T_3$ vorgesehen. Bei Erreichen dieser Triggerspannung $T_3$ wird, wenn die Schrauben fehlerhaft gestaltet sind und demzufolge Meßsignale erzeugen, die außerhalb des Toleranzbereichs von $T_1$ und $T_2$ liegen, ein Steuerungsimpuls von der Signalaufbereitungselektronik 45 erzeugt, der bewirkt, daß fehlerhafte Schrauben aussortiert werden.

Normalerweise werden die mit einem Potentiometer einstellbaren Triggerspannungen $T_1$, $T_2$ auf 0 Volt oder festen Spannungswert bezogen. Durch die vom Meßsystem verursachte sogenannte Offsetdrift können sich die Spannungswerte der Meßsignale verändern, während die Triggerspannungen $T_1$, $T_2$ konstant bleiben. Unter Offsetdrift ist die allmähliche Veränderung des Meßwertes $U_M$ durch Umwelteinflüsse, z.B. Wärme, während der Meßung zu verstehen. Zur Erhöhung der Meßgenauigkeit werden die Triggerspannungen $T_1$, $T_2$ auf den jeweils zuvor anliegenden Minimalspannungswert bezogen. Dadurch können die durch die sogenannte Offsetdrift verursachten Meßfehler fast vollständig unterdrückt werden, da sich der Minimal- und der Maximalwert der Meßsignalspannungen etwa gleich stark verändern. Voraussetzung hierzu ist aber eine möglichst schmale Gestalt oder rechteckig oder oval geformten Spulen 16, 17. Die Breite a der Spulen 16, 17 muß dazu so eng ausgebildet sein, daß selbst wenn die Spulen 16, 17 in der Mitte zwischen zwei bei minimalen Abstand aufeinanderfolgender Schäfte von Schrauben angeordnet sind, sich kein oder nur ein vernächläßigbarer geringer Wirbelstrom an den Oberflächen ausbilden kann.

Die Figuren 5 bis 9 zeigen Ausgestaltungen der Spulen 16, 17 und der dazugehörigen Elektronik zur zusätzlichen Verfeinerung der gewonnenen Meßsignale $U_M$. Hierzu werden die Spulen 16, 17 in mehrere Abschnitte 46 bis 49 aufgeteilt. In Figur 5 sind diese Abschnitte als vier auf jeder Seite angeordnete Einzelspulen dargestellt. Die Bezugsziffern für die Spulen der zweiten Seite sind mit "a" ergänzt. Es ist aber auch eine andere Anzahl von Spulen bzw. Abschnitten möglich. Jeweils die einander gegenüberliegenden Spulen 46 bzw. 46a sind wie oben in Reihe und in den Spannungsteiler der Auswerteschaltung 21 verschaltet. Das in der Auswerteschaltung 21 gewonnene Meßsignal $U_M$ wird der Signalaufbereitungselektronik 45 zugeführt und so in ein Digitalsignal umgewandelt. Die gewonnene Spannung jedes einzelnen Spulenpaares wird in dieser Weise bestimmt und digitalisiert. Mit Hilfe einer angeschlossenen Logikschaltung 53 kann bei einheitlichen Digitalsignalen eine nicht dargestellte Sortieranlage gesteuert werden. Diese Logikschaltung 53 weist in an sich bekannter Weise logische Bauelemente wie UND- bzw. ODER-Glieder auf. Ist das Gewinde an einer Stelle nicht in Ordnung, so weicht das Digitalsignal dieses Bereichs von den übrigen Digitalsignalen ab. Die Logikschaltung 53 erkennt dieses Abweichen des Digitalsignals und bewirkt, daß die Sortieranlage diese Schraube als fehlerhaft auswirft.

Besonders einfach und dabei die Meßsicherheit nur unwesentlich beeinträchtigend ist es, wenn entsprechend Figur 7 und 8 zwei sich gegenüberliegende Spulen 55, 55a den Zweig einer Spannungsbrücke bilden und jeweils zwei Spulenpaare 55, 56, wie in Figur 8 gezeigt, in einer Wheatstone'schen Brücke 57 verschaltet sind. Dadurch ist eine Reduzierung des meßtechnischen Aufwandes, insbesondere eine Halbierung der Schaltung nach Figur 6 möglich. Es können also Auswerteschaltungen 21 und Signalaufbereitungselektroniken 45 eingespart werden, wie aus Figur 9 ersichtlich ist.

Ragen die Spulen 16, 17, wie aus Figur 10 ersichtlich, über die Länge des Schafts 18 der Schraube hinaus, so kann sowohl die Form des Gewindes als auch die Länge des Schafts 18 bestimmt werden. Dadurch wird eine Verbesserung der Erkennung der Länge des Schafts 18 erreicht, ohne dabei wesentlich die Meßsignale $U_M$ bezüglich der Gewindeform zu beeinträchtigen. Selbstverständlich sind alle oben, insbesondere in den Figuren 5 bis 9 ausgeführten Abwandlungen auch möglich.

In einer weiteren Abwandlung des Ausführungsbeispiels nach Figur 11 kann zusätzlich zu den bereits oben erwähnten Kriterien oder auch alleine die Kontur des Kopfs 60 einer Schraube 61 überprüft werden. Es können sowohl die Art des Kopfs 60 als auch Fehler am Schraubenkopf 60 selbst erkannt werden. In einer Halterung 62 befindet sich eine Spule 63, die entsprechend dem oben ausgeführten Wirbelstrommeßprinzip arbeitet und vorzugsweise ringförmig ausgebildet werden kann. Auch hier enthält man abhängig von der Form des Kopfes 60 die im Diagramm nach Figur 4 dargestellten Meßsignale $U_M$. Da aber ein konstanter Abstand c zwischen der Oberfläche der Spule 63 und der Auflagefläche 64 des Schraubenkopfs 60 vorausgesetzt ist, ist keine in Reihe geschaltete zweite Spule zur Kompensation der Meßfehler notwendig.

Ist an die Meßeinrichtung eine Positionieranlage für die Schrauben 13 angeschlossen, so ist zu Beginn des Positioniervorgangs zu überprüfen, ob sich eine Schraube in der als Zuführgerät dienenden Zangenbacke 67 (siehe Figur 12) befindet. Hierzu ist am Ende des Zuführkanals 68 der Zangenbacke 67, wie in Figur 12a dargestellt, eine Spule 69 angeordnet, die wie oben nach den Wirbelstromprinzip arbeitet. Eine Auswertung des Meßsignals ist mit der in Figur 3 dargestellten Schaltung 21 möglich. Für die Erkennung, ob bereits eine Schraube 13 zugeführt wird oder nicht, genügt das am Ausgang der Schaltung 21 gewonnene Meßsignal $U_M$. Mit Hilfe eines Schraubendrehers 70 kann anschließend die Schraube 13 eingedreht werden.

Selbstverständlich ist es auch möglicht, daß die Meßeinrichtung und somit die Spulen und die Oberflächen der Schrauben nach dem induktiven Verfahren betrieben werden. Dabei gelten sinngemäß die gleichen Verhältnisse. Die Oberflächen der Schrauben müssen dann aus ferromagnetischem Stoff bestehen. Deshalb können nach den induktiven Verfahren nur Schrauben aus ferromagnetischem Material oder mit einer solchen Oberfläche aussortiert werden. Hingegen können mit dem Wirbelstromverfahren Schrauben aus ferromagnetischem Material (z.B. Fe) oder aus nicht ferromagnetischem, jedoch elektrisch leitendem Material (z.B. Al, Zn) geprüft und unterschieden werden. Ferner sind auch Materialfehler, wie z.B. Risse, erkennbar.

Eine weitere Möglichkeit den Schraubenschaft zu überprüfen, ist in der Figur 13 dargestellt. Für Spezialfälle kann es auch notwendig sein, Schrauben 71 vor dem Einbau einzeln zu überprüfen. Hierzu wird die zu überprüfende Schraube 71 mit einer Referenzschrauben 72 verglichen. Die Schraube 71 und die Referenzschraube 72 befinden sich in je einer gleich ausgebildeten Spule 73, die wie oben nach dem Wirbelstromprinzip betrieben wird und in einer in Figur 14 dargestellten Wheatstone'schen Brücke verschaltet sind. Die erzeugten Meßsignale werden wieder sinngemäß mit Hilfe der Schaltung 21 ausgewertet.

Stimmen die Referenzschraube 72 und die Schraube 71 in ihrer Form überein, so ergibt sich am Ausgang der Schaltung 21 ein Meßsignal von $U_M$ = 0. Abweichungen von der Form der Referenzschraube 72 werden als Veränderung des Meßwertes von Null bzw. von den vorgegebenen Toleranzschranken erkannt. Besonders vorteilhaft ist dieses Verfahren für Kleinserien, da keine neuen Daten bzw. Toleranzwerte in die Elektronik eingegeben werden müssen, sondern nur eine neue Referenzschraube 72 eingesetzt wird. Die oben ausgeführten Auswerteverfahren, insbesondere über das Diagramm nach Figur 4, sind entsprechend angeglichen auch hier verwendbar.

Mit den hier beschriebenen Meßeinrichtungen ist es auch möglich Innengewinde zu bestimmen. Hierzu wird z.B. im Ausführungsbeispiel nach Figur 13 die Schraube 73 in eine Sacklochbohrung oder in die Bohrung einer Mutter eingebracht.

Auch bei dem Ausführungsbeispiel nach Figur 1 bis 12 ist es möglich mit Hilfe einer Referenzschraube und einer zweiten Meßeinrichtung mit den Spulen 16, 17 zu arbeiten.

## Patentansprüche

1. Meßeinrichtung zur berührungsfreien Erfassung der Gestalt von aus ferro- und/oder nicht ferromagnetischem, jedoch elektrisch leitendem Material bestehender, schraubenförmiger Bauteile (13), wobei die Meßeinrichtung eine Laufschiene (10) für die Bauteile (13) und mindestens zwei gegenüberliegende und von einem Wechselstrom durchflossene Spulen (16, 17) aufweist, durch die die Bauteile (13) hindurchbewegt werden, wobei diese Spulen (16, 17) in Reihe miteinander in einem Brückenzweig einer elektronischen Auswerteschaltung (21) verschaltet sind, und die Meßspannungen der Spulen (16, 17) mit einem vorgegebenen Sollwert (T1, T2) verglichen werden.

2. Meßeinrichtung nach Anspruch 1, dadurch gekennzeichnet, daß eine Elektronik(45) zur Umwandlung der von den jeweiligen Auswerteschaltungen (21) ermittelte Meßspannung in ein Digitalsignal und eine Logicschaltung (53) zum Vergleich der Digitalsignale aller Spulen (16, 17) vorgesehen sind.

3. Meßeinrichtung nach Anspruch 1 und/oder 2, dadurch gekennzeichnet, daß jeweils zwei gegenüberliegende Spulen (16, 17) einem Spannungsteiler (38) oder den Zweig einer Wheatstone'schen Brücke (55) bilden, die jeweils Teil der Auswerteschaltung (21) sind.

4. Meßeinrichtung nach einem der Ansprüche 1 bis 3, dadurch gekennzeichnet, daß die Länge der Spulen (16, 17) über die Länge des Bauteils (13) hinausragt.

5. Meßeinrichtung nach einem der Ansprüche 1 bis 4, dadurch gekennzeichnet, daß die Spulen (16, 17) in mehrere in Reihe zueinander verschaltete Teilspulen unterteilt sind.

6. Meßeinrichtung nach einem der Ansprüche 1 bis 5, dadurch gekennzeichnet, daß jeweils zwei Spulen (55, 55a) den Zweig einer Wheatstone'schen Brücke (57) bilden und die jeweils darunter angeordnete Spulen (56, 56a) in den gegenüberliegenden Zweig der Wheatstone'schen Brücke (57) verschaltet sind.

7. Meßeinrichtung nach einem der Ansprüche 1 bis 6, dadurch gekennzeichnet, daß die Spulen (16, 17) länglich ausgebildet sind und die Breite der Spulen (16, 17) so klein ist, daß durch die Spulen bei Positionierung in der Mitte zwischen zwei bei minimalem Abstand aufeinander folgender Bauteile (13) sich kein oder nur ein vernachlässigbarerer geringer Wirbelstrom ausbilden kann.

**8.** Meßeinrichtung nach einem der Ansprüche 1 bis 7, dadurch gekennzeichnet, daß die Elektronik (45) zwei einstellbare Triggerspannungen (T₁, T₂) zur Sollwertbegrenzung aufweist.

**9.** Meßwerteinrichtung nach einem der Ansprüche 1 bis 8, dadurch gekennzeichnet, daß die Sollwerte (T₁, T₂) auf den Meßspannungswert bezogen sind, der sich bei Positionierung der Spule in der Mitte zwischen zwei bei minimalen Abstand aufeinander folgender Bauteile ergibt.

**10.** Meßeinrichtung nach einem der Ansprüche 1 bis 9, dadurch gekennzeichnet, daß die Meßsignale an einer Vorgegebenen Triggerspannung (T₃) abgegriffen werden und diese einen Sortierer für die Bauteile (13) steuert.

**11.** Meßeinrichtung nach einem der Ansprüche 1 bis 10, dadurch gekennzeichnet, daß in einer zweiten Meßeinrichtung eine Referenzschraube angeordnet ist, die den Sollwert einstellt.

**12.** Meßeinrichtung nach einem der Ansprüche 1 bis 11, dadurch gekennzeichnet, daß parallel zum Kopf (60) des Bauteils (61) mindestens eine Spule (63) angeordnet ist.

**13.** Meßeinrichtung nach einem der Ansprüche 1 bis 12, dadurch gekennzeichnet, daß die Meßeinrichtung nach dem Wirbelstromprinzip arbeitet.

**14.** Meßeinrichtung nach einem der Ansprüche 1 bis 12, dadurch gekennzeichnet, daß die Meßeinrichtung nach dem induktiven Prinzip arbeitet.

**15.** Meßeinrichtung nach einem der Ansprüche 1 bis 14, dadurch gekennzeichnet, daß das Bauteil (12) in mindestens eine erste Spule (73) eintaucht und in mindestens einer zweiten Spule (73) sich ein Referenzbauteil (71) befindet und daß beide Spulen (73) in eine Wheatstone'sche Brücke (74) geschaltet sind, die Teil einer elektronischen Auswerteschaltung (21) ist.

**16.** Meßeinrichtung nach Anspruch 15, dadurch gekennzeichnet, daß die beiden Spulen (73) aus mehreren in Reihe geschaltete und jeweils eigene Abgriffstellen aufweisende Spulenteile bestehen.

## Claims

**1.** Measuring device for contactless sensing of the form of screw-shaped components (13), consisting of ferromagnetic and/or non-ferromagnetic but electrically conductive material, the measuring device having a running rail (10) for the components (13) and at least two opposite coils (16, 17), through which an alternating current flows and through which the components (13) are moved, these coils (16, 17) being connected in series to one another in a bridge arm of an electronic evaluation circuit (21), and the measuring voltages of the coils (16, 17) being compared with a prescribed desired value (T1, T2).

**2.** Measuring device according to Claim 1, characterised in that there are provided electronics (45) for converting the measuring voltage determined by the respective evaluation circuits (21) into a digital signal, and a logic circuit (53) for comparing the digital signals of all the coils (16, 17).

**3.** Measuring device according to Claim 1 and/or 2, characterised in that two opposite coils (16, 17) respectively form a voltage divider (38) or the arm of a Wheatstone bridge (55), which are respectively part of the evaluation circuit (21).

**4.** Measuring device according to one of Claims 1 to 3, characterised in that the length of the coils (16, 17) projects beyond the length of the component (13).

**5.** Measuring device according to one of Claims 1 to 4, characterised in that the coils (16, 17) are subdivided into a plurality of coil sections connected in series to one another.

**6.** Measuring device according to one of Claims 1 to 5, characterised in that two coils (55, 55a) respectively form the arm of a Wheatstone bridge (57), and the coils (56, 56a) respectively arranged therebelow are connected in the opposite arm of the Wheatstone bridge (57).

**7.** Measuring device according to one of Claims 1 to 6, characterised in that the coils (16, 17) are constructed in an elongated fashion and the width of the coils (16, 17) is so small that, given positioning in the middle between two components (13) following one another at a minimum distance, no eddy current, or only a negligibly small eddy current, can be formed by the coils.

**8.** Measuring device according to one of Claims 1 to 7, characterised in that the electronics (45) has two adjustable trigger voltages (T₁, T₂) for desired value limitation.

9. Measuring device according to one of Claims 1 to 8, characterised in that the desired values ($T_1$, $T_2$) are referred to the measuring voltage value which arises in the case of positioning the coil in the middle between two components following one another at a minimum distance.

10. Measuring device according to one of Claims 1 to 9, characterised in that the measuring signals are tapped at a prescribed trigger voltage ($T_3$), and this voltage controls a sorter for the components (13).

11. Measuring device according to one of Claims 1 to 10, characterised in that a reference screw, which adjusts the desired value, is arranged in a second measuring device.

12. Measuring device according to one of Claims 1 to 11, characterised in that at least one coil (63) is arranged parallel to the head (60) of the component (61).

13. Measuring device according to one of Claims 1 to 12, characterised in that the measuring device operates according to the eddy-current principle.

14. Measuring device according to one of Claims 1 to 12, characterised in that the measuring device operates according to the inductive principle.

15. Measuring device according to one of Claims 1 to 14, characterised in that the component (72) dips into at least a first coil (73), and a reference component (71) is situated in at least a second coil (73) and in that both coils (73) are connected into a Wheatstone bridge (74), which is part of an electronic evaluation circuit (21).

16. Measuring device according to Claim 15, characterised in that the two coils (73) consist of a plurality of coil sections which are connected in series and each have their own tapping points.

**Revendications**

1. Appareil de mesure pour détecter sans contact la structure de composants (13) en forme de vis, réalisés en un matériau ferromagnétique et/ou non ferromagnétique mais conducteur d'électricité, cet appareil de mesure comprenant un rail de circulation (10) pour les composants (13) et au moins deux bobines (16, 17) opposées l'une à l'autre et traversées par un courant alternatif, les composants (13) passant par les bobines, les bobines (16, 17) étant branchées en série dans un montage en pont et reliées à un circuit d'exploitation électronique (21) et les tensions de mesure des bobines (16, 17) sont comparées à une valeur de consigne ($T_1$, $T_2$) prédéterminée.

2. Appareil de mesure selon la revendication 1, caractérisé en ce que sont prévus un circuit électronique (45) pour transformer la tension de mesure fournie par les circuits d'exploitation (21) respectifs en un signal numérique, et un circuit logique (53) pour comparer les signaux numériques de toutes les bobines (16, 17).

3. Appareil de mesure selon la revendication 1 et/ou 2, caractérisé en ce que chaque fois deux bobines en regard (16, 17) forment un diviseur de tension (38) ou la branche d'un pont de Wheatstone (55) faisant partie du circuit d'exploitation (21).

4. Appareil de mesure selon l'une des revendications 1 à 3, caractérisé en ce que la longueur des bobines (16, 17) dépasse la longueur du composant (13).

5. Appareil de mesure selon l'une des revendications 1 à 4, caractérisé en ce que les bobines (16, 17) sont subdivisées en plusieurs parties de bobine branchées en série.

6. Appareil de mesure selon l'une des revendications 1 à 5, caractérisé en ce que chaque fois deux bobines (55, 55a) forment la branche d'un pont de Wheatstone (57) et les bobines (56, 56a) qui se trouvent en-dessous sont montées dans la branche opposée du pont de Wheatstone (57).

7. Appareil de mesure selon l'une des revendications 1 à 6, caractérisé en ce que les bobines (16, 17) sont allongées et la largeur des bobines (16, 17) est suffisamment petite pour que lorsque les bobines se trouvent au milieu de l'intervalle minimum séparant deux composants (13) successifs, il ne se produise pas de courant de Foucault ou aucun courant négligeable.

8. Appareil de mesure selon l'une des revendications 1 à 7, caractérisé en ce que le circuit électronique (45) présente deux tensions de déclenchement ($T_1$, $T_2$) réglables pour limiter

la valeur de consigne.

9. Appareil de mesure selon l'une des revendications 1 à 8, caractérisé en ce que les valeurs de consigne ($T_1$, $T_2$) sont rapportées à la valeur de mesure obtenue lors du positionnement de la bobine au milieu de l'intervalle minimum de deux composants successifs.

10. Appareil de mesure selon l'une des revendications 1 à 9, caractérisé en ce que les signaux de mesure sont pris sur une tension de déclenchement ($T_3$) prédéterminée et celle-ci commande le classement des composants (13).

11. Appareil de mesure selon l'une des revendications 1 à 10, caractérisé par une vis de référence placée dans un second appareil de mesure et qui fixe la valeur de consigne.

12. Appareil de mesure selon l'une des revendications 1 à 11, caractérisé par au moins une bobine (63) en parallèle sur la tête (60) du composant (61).

13. Appareil de mesure selon l'une des revendications 1 à 12, caractérisé en ce qu'il fonctionne suivant le principe des courants de Foucault.

14. Appareil de mesure selon l'une des revendications 1 à 12, caractérisé en ce qu'il fonctionne suivant le principe inductif.

15. Appareil de mesure selon l'une des revendications 1 à 14, caractérisé en ce que le composant (72) est plongé dans au moins une première bobine (73) et en ce qu'un composant de référence (71) est plongé dans au moins une seconde bobine (73) et en ce que les deux bobines (73) sont montées dans un pont de Wheatstone (74) qui fait partie du circuit d'exploitation électronique (21).

16. Appareil de mesure selon la revendication 15, caractérisé en ce que les deux bobines (73) se composent de plusieurs parties de bobine branchées en série et ayant chacune un point de prise de signal.

A

B

13

16

10

11

a

FIG.1

13

15

14

16

17

18

FIG.2

11

12

FIG.3

EP 0 283 650 B1

FIG.4

**13**

46
46a
47
47a
48
48a
49
49a

**FIG.5**

55
55a
56
56a

**FIG.7**

21
45
21
45
53
21
45
21
45

**FIG.6**

57

55

55a

56

56a

$U_{BM} \sim U_M$

FIG.8

21

46 46a
47 47a

45

53

21

48 48a
49 49a

45

FIG.9

62

63

64

13

60

C

18

16

17

FIG.10

61

FIG.11

FIG.12

FIG.12a

FIG.13

FIG.14

FIG.15